# EUROPÄISCHE PATENTSCHRIFT

(11) **EP 4 203 295 B1**
(45) Veröffentlichungstag und Bekanntmachung des Hinweises auf die Patenterteilung: **30.04.2025**
(21) Anmeldenummer: 22215112.8
(22) Anmeldetag: 20.12.2022
(51) Int. Cl.: H02P 6/16, H02P 25/22, H02K 1/14, G01D 5/14, H02K 29/08, H02P 8/12

(54) **ELEKTROMOTOR FÜR EINE STELLENDE ODER FÖRDERNDE VORRICHTUNG EINES KRAFTFAHRZEUGS**
ELECTRIC MOTOR FOR A POSITIONING OR CONVEYING DEVICE OF A MOTOR VEHICLE
MOTEUR ÉLECTRIQUE POUR UN DISPOSITIF DE RÉGLAGE OU DE TRANSPORT D'UN VÉHICULE AUTOMOBILE

(30) Priorität: 21.12.2021 DE 102021134064
(43) Veröffentlichungstag der Anmeldung: 28.06.2023
(73) Patentinhaber: Pierburg GmbH, 41460 Neuss (DE)
(72) Erfinder: BÜRGER, Frank, 52379 Langerwehe (DE); BEUTLER, Richard, 41564 Kaarst (DE); GERARDS, Hans, 52538 Gangelt (DE)
(74) Vertreter: terpatent PartGmbB

(56) Entgegenhaltungen:
- DE-A1- 102020 112 658
- JP-A- 2015 114 208
- US-A1- 2017 244 345

## Beschreibung

Die Erfindung betrifft einen Elektromotor für eine stellende oder fördernde Vorrichtung eines Kraftfahrzeugs, mit einem Stator mit einer ersten Wicklung und einer zweiten Wicklung, wobei die zweite Wicklung und die erste Wicklung unabhängig voneinander, insbesondere phasenverschoben, ansteuerbar sind, einem Rotor, welcher mit den durch eine Bestromung der Wicklungen entstehenden Magnetfeldern magnetisch zusammenwirkt, und einer Sensorvorrichtung zur Erfassung einer Position des Rotors.

Derartige Elektromotoren für stellende oder fördernde Vorrichtungen sind in unterschiedlichsten Ausführungsformen aus dem Stand der Technik bekannt. Unter derartigen Vorrichtungen sind insbesondere unterschiedliche Ventile zu verstehen, wobei durch den Elektromotor ein Ventilkörper zwischen unterschiedlichen Stellungen stufenartig oder stufenlos verstellbar ist. Ein Beispiel dafür sind Expansionsventile, welche dazu dienen, den Druck eines Arbeitsfluids durch Drosselung des zur Verfügung stehenden und durch den Ventilkörper veränderbaren Durchströmungsquerschnitts zu verringern und das Volumen des Arbeitsfluids zu erhöhen, dieses also zu expandieren. Durch die Verwendung geregelter Expansionsventile kann dabei sowohl der Druckabfall und damit die Volumenzunahme geregelt werden als auch der Fluidstrom nahezu vollständig unterbrochen werden. Unter einer fördernden Vorrichtung sind insbesondere Pumpen bzw. Verdichter zu verstehen, wobei der Elektromotor, im Gegensatz zu stellenden Vorrichtungen, welche unterschiedliche Stellungen anfahren, einem kontinuierlichen Antrieb eines Pumpen- bzw. Verdichterrotors dienen, wodurch ein Fluid kontinuierlich gefördert wird.

Eine Ausführungsform eines Elektromotors für stellende oder fördernde Vorrichtungen weist einen Stator mit zwei Wicklungen auf, wobei bei einer Bestromung der Wicklungen in Abhängigkeit von der Stromrichtung der bestromten Wicklungen ein Magnetfeld in unterschiedliche Richtungen hervorgerufen wird. Das durch die Bestromung der Wicklungen hervorgerufene Magnetfeld wirkt mit einem magnetisierten Rotor zusammen, wobei der Rotor dadurch angetrieben wird und um eine Axialachse rotiert.

Weiterhin unterscheiden sich Elektromotoren in der Art der Kommutierung. Bei den bürstenlosen Motoren wird nochmals zwischen sensorloser und sensorgesteuerter Kommutierung unterschieden. Die Elektromotoren mit einer sensorgesteuerten Kommutierung umfassen üblicherweise eine Sensorvorrichtung, welche mehrere Hall-Sensoren zur Erfassung der Rotorposition durch Erfassung eines Magnetfelds des Rotors aufweisen, wobei entsprechend der Rotorposition die Wicklungen des Stators über eine entsprechende Steuerelektronik angesteuert werden. Der entscheidende Vorteil der sensorgesteuerten Kommutierung ist, dass der Elektromotor auch bei sehr geringen Drehzahlen bzw. im Stand betrieben werden kann.

Ein derartiger Elektromotor ist beispielsweise in der DE 10 2015 106 890 A1 offenbart. Dabei ist der Elektromotor als ein Zweiphasen-Schrittmotor ausgeführt, wobei die beiden Phasen um 90° phasenverschoben zueinander angesteuert werden. Der Elektromotor weist weiterhin entweder eine Sensorvorrichtung mit einem einzigen Hallsensor, wobei ein zweites Ausgangssignal durch eine Differentiation von einem ersten Ausgangssignal abgeleitet wird, oder zwei Hallsensoren mit jeweils einem Ausgangssignal auf. Die beiden Ausgangssignale werden zur phasenverschobenen Ansteuerung der beiden Wicklungen genutzt. Nachteilig an der ersten Ausführung, d.h. mit einem einzigen Hallsensor, ist, dass die Ermittlung des zweiten Ausgangssignals aufwendig ist und erst bei einer Bewegung, insbesondere einer Drehung, eines mit dem Hallsensor zusammenwirkenden Magnetfelds erfolgen kann. Damit ist die erste Ausführung insbesondere für stellende Vorrichtungen, bei welcher die Drehzahl des Rotors relativ gering ist, eher ungeeignet. Die zweite Ausführungsform, d.h. mit zwei Hallsensoren, hat den Nachteil, dass ein entsprechender Bauraum für die beiden Hallsensoren zur Verfügung stehen muss. Weiterhin erhöhen die beiden Hallsensoren die Kosten und den Montageaufwand des Elektromotors.

Ferner ist aus JP 2015 114208 A und aus DE 10 2020 112 658 A1 jeweils ein Elektromotor mit einem zweiphasigen Stator bekannt, wobei die für die Ansteuerung des Stators erforderliche Drehwinkelposition des Rotors durch einen mehrachsigen Hall-Sensor ermittelt wird. In der Ausführung der DE 10 2020 112 658 A1 ist der Stator als Klauenpolstator ausgeführt.

Ferner ist aus der US 2017/244345 A1 ein Stellantrieb für eine Klappe oder für ein Ventil zum Einstellen eines gasförmigen oder flüssigen Volumenstroms bekannt, wobei der Stellantrieb einen bürstenlosen Zweiphasen-Gleichstrommotor und einen Hall-Sensor aufweist.

Es stellt sich die Aufgabe, einen Elektromotor bereitzustellen, bei welchem die voneinander unabhängige bzw. phasenverschobene Ansteuerung der beiden Wicklungen auf eine einfache, zuverlässige, bauraumsparende und kostengünstige Weise erfolgen kann.

Diese Aufgabe wird durch einen Elektromotor für eine stellende oder fördernde Vorrichtung eines Kraftfahrzeugs mit den Merkmalen des Anspruchs 1 gelöst.

Der erfindungsgemäße Elektromotor weist eine Sensorvorrichtung mit einem Mehr-Phasen-Hall-Element mit zwei Ausgangssignalen auf. Das erste Ausgangssignal ist der ersten Wicklung zugeordnet, so dass die erste Wicklung durch das erste Ausgangssignal angesteuert wird. Das zweite Ausgangssignal ist der zweiten Wicklung zugeordnet, so dass die zweite Wicklung durch das zweite Ausgangssignal angesteuert wird.

Das Mehr-Achsen-Hall-Element weist mehrere senkrecht zueinander, d.h. 90° zueinander, ausgerichtete Achsen auf, wobei durch das Mehr-Achsen-Hall-Element in Richtung der Achsen ausgerichtete Magnetfeldlinie und die dazugehörige magnetische Flussdichte erfasst werden können. In anderen Worten erfasst das Mehr-Achsen-Hall-Element zwei verschiedene Komponenten der magnetischen Flussdichte. Dabei verändert sich die erfasste Magnetflussdichte und damit die Ausgangssignale in Abhängigkeit von der Rotorposition, wobei sich die Magnetflussdichte in die jeweilige Richtung zwischen einem Maximum und einem Minimum verändert, wobei das Maximum bzw. das Minimum der ersten Achse zum Maximum bzw. Minimum der zweiten Achse phasenverschoben sind.

Dadurch, dass die Achsen 90° zueinander ausgerichtet sind, sind die Ausgangssignale des Mehr-Achsen-Hall-Elements phasenverschoben zueinander. Die Phasenverschiebung der Ausgangssignale entspricht der erforderlichen Phasenverschiebung zur Ansteuerung der beiden Wicklungen. Damit können die Ausgangssignale des Mehr-Achsen-Hall-Elements unverändert bzw. nahezu unverändert zur Ansteuerung der beiden Wicklungen genutzt werden. Dadurch besteht eine direkte Verknüpfung zwischen der Rotorposition und der Ansteuerung der Wicklungen.

Der Stator ist ein Klauenpolstator, wobei der Klauenpolstator zwei, vorzugsweise identische, Klauenpolstatorelemente aufweist, welche axial nebeneinander angeordnet sind und jeweils eine Wicklung und jeweils ein Klauenpolblechpaar aufweisen. Ein Klauenpolstator bzw. ein Klauenpolmotor mit zwei Klauenpolstatorelementen ist ein zweiphasiger Elektromotor, welcher auf eine einfache und kostengünstige Weise hergestellt werden kann und für niedrige Drehzahlen besonders gut geeignet ist.

Jedes Klauenpolblechpaar weist zwei Klauenpolbleche auf, welche jeweils einen plattenartigen Abschnitt und mehrere von dem plattenartigen Abschnitt, in Axialrichtung erstreckende und über den Umfang verteilte Klauen aufweisen. Im montierten Zustand sind die plattenartigen Abschnitte an entgegengesetzten Axialenden der Wicklungen angeordnet und die Klauen der Klauenpolbleche greifen jeweils in die freien Bereiche zwischen den Klauen des gegenüberliegenden Klauenpolblechs ein. Bei einer Bestromung der Wicklung erfolgt eine Magnetisierung der Klauenpolbleche und insbesondere der Klauen entgegengesetzt zueinander, wobei die Magnetisierung von der Richtung des Stromflusses der Wicklung abhängt.

Ein erstes Klauenpolstatorelement ist elektrisch um 90° zu einem zweiten Klauenpolstatorelement verdreht angeordnet. Auf diese Weise kann ein zweiphasiger Klauenpolmotor bereitgestellt werden, wobei durch die 90°-Verdrehung der Klauenpolstatorelemente eine um 90°-phasenverschobene Ansteuerung der beiden Wicklungen erforderlich ist, und wobei die erforderliche, phasenverschobene Ansteuerung der Wicklungen direkt durch die Ausgangssignale des Mehr-Achsen-Hall-Elements erfolgen kann.

Durch die Ausführung des Elektromotors mit einem Mehr-Achsen-Hall-Element kann die Ansteuerung, insbesondere die phasenverschobene Ansteuerung, der beiden Wicklungen auf eine einfache, zuverlässige, bauraumsparende und kostengünstige Weise erfolgen, wobei lediglich ein Hall-Element erforderlich ist und auf eine aufwendige Aufbereitung der Ausgangssignale verzichtet werden kann. Weiterhin kann dadurch eine feine Auflösung bei der Erfassung der Rotorposition bereitgestellt werden.

Vorzugsweise sind die der ersten Wicklung zugeordnete Magnetpole zu den der zweiten Wicklung zugeordneten Magnetpolen verdreht angeordnet, wobei die Phasenverschiebung zwischen den beiden Ausgangssignalen des Mehr-Achsen-Hall-Elements identisch zu der elektrischen Verdrehung zwischen den beiden, den beiden Wicklung zugeordneten Magnetpolen ist. In einer bevorzugten Ausgestaltung sind die der ersten Wicklung zugeordneten Magnetpole um 90° elektrisch zu den der zweiten Wicklung zugeordneten Magnetpolen verdreht angeordnet. Dadurch, dass die elektrische Verdrehung der den beiden Wicklungen zugeordneten Magnetpole relativ zueinander der Phasenverschiebung der beiden Ausgangssignale entspricht, kann eine feste Verknüpfung zwischen den Ausgangssignalen und der Ansteuerung der Wicklungen hergestellt werden.

Vorzugsweise sind die der ersten Wicklung zugeordneten Magnetpole um einen Winkel = 90°/Polpaaranzahl zu den der zweiten Wicklung zugeordneten Magnetpolen mechanisch verdreht angeordnet. Bei acht Magnetpolpaaren ist der Winkel 11,25°, wobei diese mechanische Verdrehung bei acht Magnetpolpaaren einer elektrischen Verdrehung von 90° entspricht.

Vorzugsweise ist das Mehr-Achsen-Hall-Element ein Mehr-Achsen-Hall-Schalter, wobei der Mehr-Achsen-Hall-Schalter bei einer Überschreitung eines Magnetfeld-Schwellenwerts in einen ersten Schaltzustand schaltbar ist und unterhalb des Magnetfeld-Schwellenwerts in einen zweiten Schaltzustand schaltbar ist. In anderen Worten detektiert der Mehr-Achsen-Hall-Schalter bei einer Rotation des Rotors für jede Achse, ob eine ausreichend hohe Magnetflussdichte vorliegt oder nicht. Aus den Schaltzuständen resultiert für jede Achse jeweils ein sinusförmiges Ausgangssignal, wobei aufgrund der 90°-Anordnung der beiden Achsen zueinander ein sinusförmiges, erstes Ausgangssignal für die Ansteuerung der ersten Wicklung und ein cosinusförmiges, zweites Ausgangssignal zur Ansteuerung der zweiten Wicklung hervorgeht. Damit können die Wicklungen auf eine einfache Weise in Abhängigkeit von der Rotorposition phasenverschoben angesteuert werden.

Vorzugsweise weist der Rotor mehrere Permanentmagnete oder mehrere permanent magnetisierte Bereiche auf, wobei die Permanentmagnete bzw. die magnetisierten Bereiche derart angeordnet oder ausgeführt sind, dass über einen ringförmigen Querschnitt jeweils ein Nordpol und ein Südpol abwechselnd angeordnet sind. In einer bevorzugten Ausgestaltung wirken das Mehr-Achsen-Hall-Element zur Erfassung des Drehwinkels des Rotors mit den Permanentmagneten oder den magnetisierten Bereichen des Rotors zusammen, wobei der Rotor axial aus dem Stator herausragt, wobei an einem herausragenden Abschnitt des Rotors das Mehr-Achsen-Hall-Element angeordnet ist. Dadurch können die Permanentmagnete oder die magnetisierten Bereiche des Rotors zur Ermittlung der Rotorposition verwendet werden, so dass kein zusätzlicher Sensormagnet erforderlich ist. Die Funktionsweise ist auch bei einem bündig mit dem Stator ausgeführten Rotor gegeben, wobei bei einem aus dem Stator herausragenden Rotor die Erfassung des Magnetfeldes verbessert ist.

Vorzugsweise ist das Mehr-Achsen-Hall-Element ein Zwei-Achsen-Hall-Element oder ein Drei-Achsen-Hall-Element. Beim Drei-Achsen-Hall-Element werden ausschließlich zwei, gemeinsam eine Ebene aufspannende Achsen für die beiden Ausgangssignale genutzt, wobei das Drei-Achsen-hall-Element in einer beliebigen Ausrichtung angeordnet werden kann. Dabei werden für die Ausgangssignale die in Radial- und Tangentialrichtung des Rotors ausgerichteten Achsen genutzt.

In einer bevorzugten Ausgestaltung weisen beide Klauenpolbleche eines Klauenpolblechpaars jeweils acht Klauen auf und der Rotor ist 16-polig ausgeführt. Dadurch kann eine feine Auflösung bei der Ansteuerung sowie bei der Ermittlung der Rotorposition erzielt werden. Bei einem 16-poligen Rotor, d.h. mit acht Magnetpolpaaren, sind die Klauenpolstatorelement um einen Winkel von 11,25°, welcher sich aus 90°/Magnetpolpaare ergibt, um eine Axialachse des Stators mechanisch verdreht zueinander angeordnet.

Es wird somit ein Elektromotor für eine stellende oder fördernde Vorrichtung eines Kraftfahrzeugs bereitgestellt, bei welchem die Ansteuerung der beiden Wicklungen auf eine einfache, zuverlässige, bauraumsparende und kostengünstige Weise erfolgen kann.

Ein Ausführungsbeispiel eines erfindungsgemäßen Elektromotors ist in den Figuren dargestellt und wird nachfolgend beschrieben.
Figur 1 zeigt ein Ventil mit einem erfindungsgemäßen Elektromotor in geschnittener Darstellung.
Figur 2 zeigt einen Stator, einen Rotor und ein Mehr-Achsen-Hall-Element des Elektromotors aus Figur 1 in perspektivischer Ansicht.
Figur 3 zeigt schematisch den Rotor und das Mehr-Achsen-Hall-Element des Elektromotors aus Figur 1 sowie den Verlauf von zwei Ausgangssignalen des zwei Mehr-Achsen-Hall-Elements.

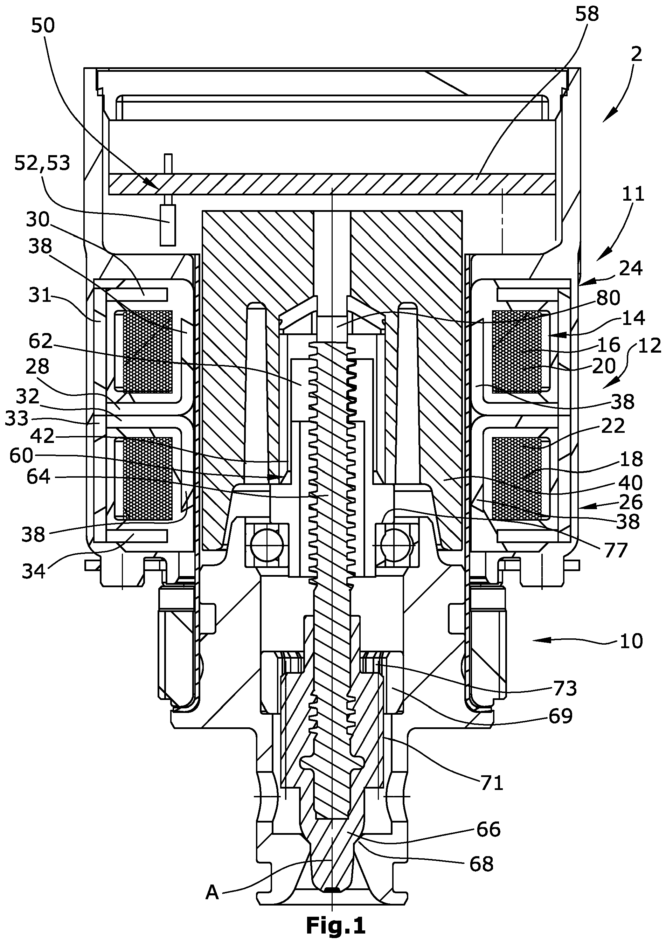

Die Figur 1 zeigt eine stellende Vorrichtung 2, insbesondere für einen Kältemittel- oder Klimakreislauf. Die Vorrichtung 2 umfasst einen Aktor 10 und ein mehrteiliges Gehäuse 11, wobei der Aktor 10 im Gehäuse 11 angeordnet ist und die Ventilkomponenten am bzw. im Gehäuse 11 angeordnet sind. Der Aktor 10 umfasst einen Elektromotor 12, eine Elektronikeinheit 58 und ein Spindelgetriebe 60.

Der Elektromotor 12 ist in Form eines permanenterregten Synchronmotors, insbesondere in Form eines Klauenpolmotors, ausgeführt. Der Elektromotor 12 weist einen Klauenpolstator 14 mit zwei, axial aneinander anliegenden Klauenpolstatorelementen 16, 18 auf, wobei die beiden Klauenpolstatorelemente 16, 18 jeweils eine Wicklung 20, 22 und ein Klauenpolblechpaar 24, 26 aufweisen. Die Klauenpolblechpaare 24, 26 weisen jeweils zwei Klauenpolbleche 28, 30, 32, 34 und jeweils ein Rückschlussblech 31, 33 auf, wobei die Klauenpolbleche 28, 30, 32, 34 jeweils einen plattenartigen Abschnitt und mehrere von den plattenartigen Abschnitten senkrecht erstreckende Klauen 38 auf. Die Klauen 38 eines Klauenpolblechs 28, 30, 32, 34 eines Klauenpolblechpaars 24, 26 greifen in einen Zwischenraum zwischen, zueinander benachbarte Klauen 38 des anderen Klauenpolblech 28, 30, 32, 34 des gleichen Klauenpolblechpaars 24, 26 ein, so dass sie Klauen 38 der Klauenpolbleche 28, 30, 32, 34 in Umfangsrichtung abwechselnd angeordnet sind. Bei einer Bestromung der Wicklung 20, 22 werden die Klauenpolbleche 28, 30, 32, 34 eines Klauenpolblechpaars 24, 26 in Abhängigkeit der Stromrichtung der Wicklung 20, 22 und dem dadurch entstehenden Magnetfeld magnetisiert, wobei bei einem Stromfluss in eine erste Richtung die Klauen 38 eines ersten Klauenpolblechs 28, 32 jeweils einen Nordpol und die Klauen 38 eines, zum ersten Klauenpolblech 28, 32 korrespondierenden, zweiten Klauenpolblechs 30, 34 jeweils einen Südpol bilden. Bei einem Stromfluss in eine zweite Richtung ändert sich die Magnetisierung der Klauenpolbleche 28, 30, 32, 34, so dass das erste Klauenpolblech 28, 32 den Südpol und das zweite Klauenpolblech 30, 34 den Nordpol bilden. Jedes Klauenpolblech 28, 30, 32, 34 weist acht Klauen 38 auf, so dass jedes Klauenpolstatorelementen 16, 18 16-polig ausgeführt ist.

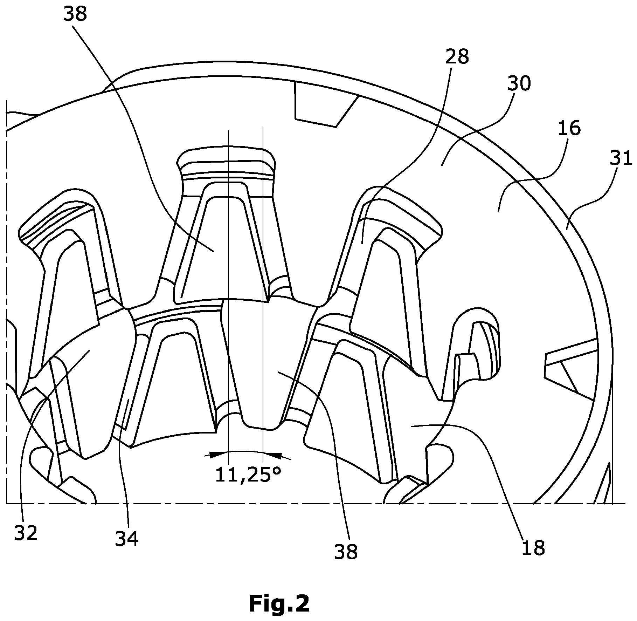

Die Klauenpolstatorelemente 16, 18 sind in Axialrichtung unmittelbar nebeneinander angeordnet, wobei die durch die Klauen 38 gebildeten Magnetpole der Klauenpolstatorelemente 16, 18, um einen Winkel von 11,25° um eine Axialachse A mechanisch verdreht zueinander angeordnet sind. Die verdrehte Anordnung der Klauenpolstatorelemente 16, 18 ist in Figur 2 gezeigt. Eine Verdrehung der Klauenpolstatorelemente 16, 18 um 11,25° entspricht bei acht Magnetpolpaaren der Klauenpolstatorelemente 16, 18 einer elektrischen Verdrehung von 90°. Eine derartige Anordnung der Klauenpolstatorelemente 16, 18 erfordert eine um 90° phasenverschobene Ansteuerung der beiden Wicklung 20, 22.

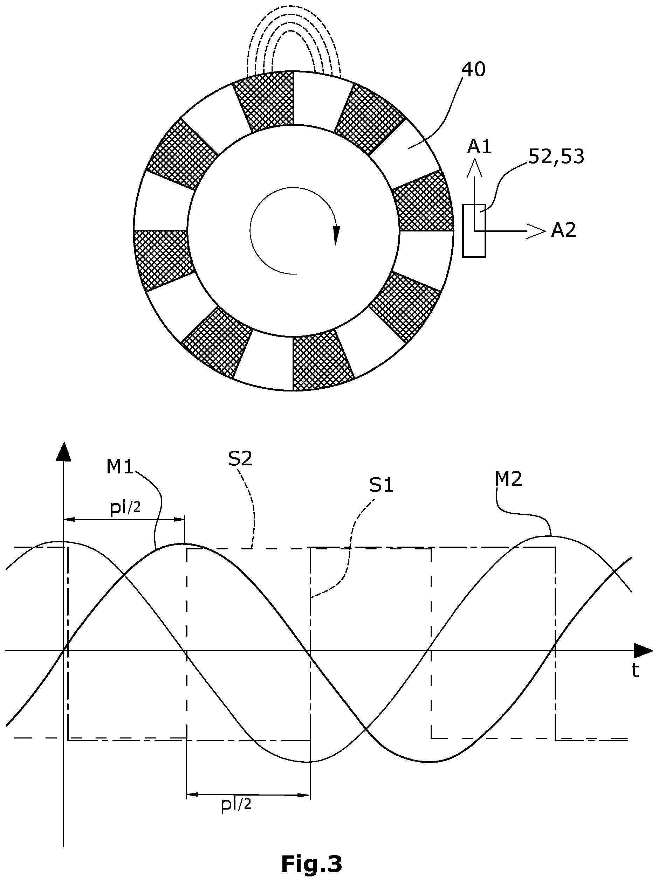

Der Elektromotor 12 weist weiterhin einen Rotor 40 auf, welcher 16-polig ausgeführt ist und entsprechende magnetisierte Bereiche aufweist. Dabei sind die Bereiche derart ausgestaltet, dass acht Nordpole N und acht Südpole S vorgesehen sind, wobei die Südpole S und die Nordpole N in Umfangsrichtung abwechselnd angeordnet sind. Die Anordnung der magnetisierten Bereiche des Rotors 40 ist in Figur 3 gezeigt, wobei das Magnetfeld zwischen einem Nordpol und einem Südpol exemplarisch eingezeichnet ist.

Der Elektromotor 12 weist außerdem eine Sensorvorrichtung 50 mit einem Mehr-Achsen-Hall-Element 52 auf. Das Mehr-Achsen-Hall-Element 52 ist an der Elektronikeinheit 58 angeordnet und ragt, wie in Figur 2 gezeigt, in Richtung des Rotors 40. Hierfür ist der Rotor 40 länger als der Klauenpolstator 14 ausgestaltet, wodurch das Mehr-Achsen-Hall-Element 52 die Magnetfelder des Rotors 40 erfassen kann. Der Rotor 40 kann auch bündig mit dem Klauenpolstator 14 ausgeführt sein, wobei auch hierbei die Magnetfelder des Rotors 40 durch das Mehr-Achsen-Hall-Element 52 erfasst werden können. Alternativ könnte auch ein separater Permanentmagnet am Rotor 40 angeordnet werden, welcher mit dem Mehr-Achsen-Hall-Element 52 zusammenwirkt.

Das Mehr-Achsen-Hall-Element 52 ist als Zwei-Achsen-Hall-Schalter 53 ausgeführt und weist zwei Ausgangssignale S1, S2 auf, wobei zwei, senkrecht zueinander ausgerichteten Achsen A1, A2 jeweils ein Ausgangssignal S1, S2 zugeordnet ist. Alternativ kann auch ein Drei-Achsen-Hall-Schalter bzw. -Sensor verwendet werden, wobei zwei, gemeinsam eine Ebene aufspannende Achsen den Ausgangssignalen S1, S2 zugeordnet sind.

Die Funktionsweise des Zwei-Achsen-Hall-Schalters 53 bezüglich der Ausgangssignale S1, S2 ist derart, dass eine Schaltung des Zwei-Achsen-Hall-Schalters 53 bei einer Überschreitung eines vordefinierten Magnetfeld-Schwellenwerts in einen ersten Schaltzustand schaltet und unterhalb des Magnetfeld-Schwellenwerts in einen zweiten Schaltzustand schaltet. Aus den erfassten Schaltzuständen wird ein der Magnetisierung des Rotors 40 entsprechendes, insbesondere ein sinusförmiges, Signal erzeugt.

Die Figur 3 zeigt schematisch die Anordnung des Zwei-Achsen-Hall-Schalters 53 an dem Rotor 40 sowie die Verläufe der Magnetflussdichten M1, M2 in Richtung der beiden Achsen A1, A2 und der zur Ansteuerung der Wicklungen 20, 22 genutzten Ausgangssignale S1, S2 des Zwei-Achsen-Hall-Schalters 53. Im Betrieb rotiert der Rotor 40 und der Zwei-Achsen-Hall-Schalter 53 erfasst die in Richtung der Achsen A1, A2 ausgerichtete Magnetfeldlinie und die dazugehörige magnetische Flussdichte. In anderen Worten erfasst der Zwei-Achsen-Hall-Schalter 53 zwei verschiedene Komponenten der magnetischen Flussdichte. Dabei verändern sich die erfassten Magnetflussdichten M1, M2 mit der Rotation des Rotors 40 zwischen einem Maximum und einem Minimum, wobei die in Figur 3 gezeigten Verläufe der beiden Magnetflussdichten M1, M2 um 90°, d.h. n/2, zueinander phasenverschoben sind. Der Zwei-Achsen-Hall-Schalter 53 schaltet zwischen zwei Schaltzuständen, woraus sich die beiden, um 90° zueinander phasenverschobene, rechteckartige Ausgangssignale S1, S2 ergeben. Das Umschalten zwischen den beiden Schaltzuständen erfolgt jeweils bei einem Über- bzw. Unterschreiten eines definierten Magnetfeld-Schwellenwerts, welcher im Bereich des Nulldurchgangs der Verläufe der Magnetflussdichten S1, S2 definiert ist. Die Phasenverschiebung der Ausgangssignale S1, S2 entspricht der erforderlichen Phasenverschiebung zur Ansteuerung der beiden Wicklungen 20, 22. Damit können die Ausgangssignale S1, S2 des Zwei-Achsen-Hall-Schalters 53 unverändert bzw. nahezu unverändert zur Ansteuerung der beiden Wicklungen 20, 22 genutzt werden. Dadurch besteht eine direkte Verknüpfung zwischen der Position des Rotors 40 und der Ansteuerung der Wicklungen 20, 22.

Das Spindelgetriebe 60 weist eine Spindelmutter 62 und eine Spindelstange 64 auf. Die Spindelmutter 62 ist in einer am Rotor 40 vorgesehenen Aufnahmeöffnung 42 angeordnet und mit dem Rotor fest verbunden. Die Spindelmutter 62 weist ein Innengewinde auf, welches in ein Außengewinde der Spindelmutter 62 eingreift.

An einem dem Rotor 40 abgewandten Axialende der Spindelstange 64 ist an der Spindelstange 64 ein Ventilkörper 66 angeordnet, der mit einem Ventilsitz 68 zusammenwirkt, welcher am Gehäuse 11 ausgebildet ist und auf welchen der Ventilkörper 66 bei Drehung des Rotors 40 aufgesetzt wird oder von dem der Ventilkörper 66 abgehoben wird, so dass eine genaue Regelung eines freien Durchströmungsquerschnitts zwischen dem Ventilsitz 68 und dem Ventilkörper 66 in Abhängigkeit der Drehstellung des Rotors 40 erfolgt.

Es wird somit ein Elektromotor 12 für eine stellende oder fördernde Vorrichtung eines Kraftfahrzeugs bereitgestellt, bei welchem die phasenverschobene Ansteuerung der beiden Wicklungen 20, 22 auf eine einfache, zuverlässige, bauraumsparende und kostengünstige Weise erfolgen kann.

Es sollte deutlich sein, dass der Schutzbereich des Hauptanspruchs nicht auf das beschriebene Ausführungsbeispiel begrenzt ist, sondern verschiedene Modifikationen möglich sind. So kann das Mehr-Achsen-Hall-Element 52 anders ausgeführt sein.

## Patentansprüche

1. Elektromotor für eine stellende oder fördernde Vorrichtung eines Kraftfahrzeugs, mit
einem Stator (14) mit einer ersten Wicklung (20) und einer zweiten Wicklung (22), wobei die zweite Wicklung (22) und die erste Wicklung (20) unabhängig voneinander ansteuerbar sind,
einem Rotor (40), welcher mit den durch eine Bestromung der Wicklungen (20, 22) entstehenden Magnetfeldern magnetisch zusammenwirkt, und
einer Sensorvorrichtung (50) zur Erfassung der Position des Rotors (40),
wobei die Sensorvorrichtung (50) ein Mehr-Achsen-Hall-Element (52) mit zwei Ausgangssignalen (S1, S2) aufweist, wobei jedes Ausgangssignal (S1, S2) jeweils einer Achse (A1, A2) zugeordnet ist, derart, dass in Richtung der Achsen (S1, S2) ausgerichtete Magnetfeldlinie und die dazugehörige Magnetflussdichte erfasst werden und sich die erfasste Magnetflussdichte und damit die Ausgangssignale (S1, S2) in Abhängigkeit von der Rotorposition verändern,
wobei das der ersten Achse (A1) zugeordnete, erste Ausgangssignal (S1) zu dem der zweiten Achse (A2) zugeordneten, zweiten Ausgangssignal (S2) phasenverschoben ist,
wobei die erste Wicklung (20) durch Nutzung des ersten Ausgangssignals (S1) ansteuerbar ist und die zweite Wicklung (22) durch Nutzung des zweiten Ausgangssignal (S2) ansteuerbar ist,
**dadurch gekennzeichnet, dass**
der Stator (14) ein Klauenpolstator ist, wobei der Klauenpolstator zwei Klauenpolstatorelemente (16, 18) aufweist, welche axial nebeneinander angeordnet sind und jeweils eine Wicklung (20, 22) und jeweils ein Klauenpolblechpaar (24, 26) aufweisen, und wobei ein erstes Klauenpolstatorelement (16, 18) um 90° zu einem zweiten Klauenpolstatorelement (16, 18) um eine Axialachse des Stators (14) elektrisch verdreht angeordnet ist.

2. Elektromotor nach Anspruch 1,
**dadurch gekennzeichnet, dass**
die der ersten Wicklung (20) zugeordneten Magnetpole zu den der zweiten Wicklung (22) zugeordneten Magnetpolen verdreht angeordnet sind, wobei die Phasenverschiebung zwischen den beiden Ausgangssignalen (S1, S2) des Mehr-Achsen-Hall-Elements (52) identisch zu der elektrischen Verdrehung zwischen den beiden, den beiden Wicklung (20, 22) zugeordneten Magnetpolen ist.

3. Elektromotor nach Anspruch 2,
**dadurch gekennzeichnet, dass**
die der ersten Wicklung (20) zugeordneten Magnetpole elektrisch um 90° zu den der zweiten Wicklung (22) zugeordneten Magnetpolen verdreht angeordnet sind.

4. Elektromotor nach Anspruch 2 oder 3,
**dadurch gekennzeichnet, dass**
die der ersten Wicklung (20) zugeordneten Magnetpole um einen Winkel = 90°/Polpaaranzahl zu den der zweiten Wicklung (22) zugeordneten Magnetpolen mechanisch verdreht angeordnet sind.

5. Elektromotor nach einem der vorhergehenden Ansprüche,
**dadurch gekennzeichnet, dass**
das Mehr-Achsen-Hall-Element (52) ein Mehr-Achsen-Hall-Schalter (53) ist, wobei der Mehr-Achsen-Hall-Schalter (53) bei einer Überschreitung eines Magnetfeld-Schwellenwerts in einen ersten Schaltzustand schaltbar ist und unterhalb des Magnetfeld-Schwellenwerts in einen zweiten Schaltzustand schaltbar ist.

6. Elektromotor nach einem der vorhergehenden Ansprüche,
**dadurch gekennzeichnet, dass**
der Rotor (40) mehrere Permanentmagnete oder mehrere permanent magnetisierte Bereiche aufweist.

7. Elektromotor nach Anspruch 6,
**dadurch gekennzeichnet, dass**
das Mehr-Achsen-Hall-Element (52) zur Erfassung des Drehwinkels des Rotors (40) mit den Permanentmagneten oder den magnetisierten Bereichen des Rotors (40) zusammenwirkt, wobei der Rotor (40) axial aus dem Stator (14) herausragt, wobei an einem herausragenden Abschnitt des Rotors (40) das Mehr-Achsen-Hall-Element (52) angeordnet ist.

8. Elektromotor nach einem der vorhergehenden Ansprüche,
**dadurch gekennzeichnet, dass**
das Mehr-Achsen-Hall-Element (52) ein Zwei-Achsen-Hall-Element oder ein Drei-Achsen-Hall-Element ist.

9. Elektromotor nach Anspruch 1,
**dadurch gekennzeichnet, dass**
beide Klauenpolbleche (28, 30, 32, 34) eines Klauenpolblechpaars (24, 26) jeweils acht Klauen (38) aufweisen und der Rotor (40) 16-polig ausgeführt ist.

## Claims

1. Electric motor for a positioning or pumping device of a motor vehicle, with
a stator (14) having a first winding (20) and a second winding (22), wherein the second winding (22) and the first winding (20) can be controlled independently from one another,
a rotor (40) which magnetically interacts with the magnetic fields produced by energization of the windings (20, 22), and
a sensor device (50) for detecting the position of the rotor (40),
wherein the sensor device (50) comprises a multi-axis Hall element (52) with two output signals (S1, S2), wherein each output signal (S1, S2) is assigned to a respective axis (A1, A2) such that magnetic field lines oriented in the direction of the axes (S1, S2) and the associated magnetic flux density are measured and the measured magnetic flux density and thus the output signals (S1, S2) change as a function of the rotor position,
wherein the first output signal (S1) associated with the first axis (A1) is phase-shifted with respect to the second output signal (S2) associated with the second axis (A2), wherein
the first winding (20) can be driven by using the first output signal (S1) and the second winding (22) can be driven by using the second output signal (S2),
**characterized in that**
the stator (14) is a claw pole stator, wherein the claw pole stator comprises two claw pole stator elements (16, 18) which are arranged axially next to one another and each comprise a winding (20, 22) and a claw pole sheet metal pair (24, 26), and wherein a first claw pole stator element (16, 18) is arranged electrically twisted by 90° to a second claw pole stator element (16, 18) around an axial axis of the stator (14).

2. Electric motor according to claim 1,
**characterized in that**
the magnetic poles associated with the first winding (20) are electrically twisted with respect to the magnetic poles associated with the second winding (22), wherein the phase shift between the two output signals (S1, S2) of the multi-axis Hall element (52) is identical to the electrical twist between the two the two magnetic poles associated with the two windings (20, 22).

3. Electric motor according to claim 2,
**characterized in that**
the magnetic poles associated with the first winding (20) are arranged so as to be electrically offset through 90° with respect to the magnetic poles associated with the second winding (22).

4. Electric motor according to claim 2 or 3,
**characterized in that**
the magnetic poles associated with the first winding (20) are mechanically offset around an angle = 90°/number of pole pairs with respect to the magnetic poles associated with the second winding (22).

5. Electric motor according to one of the preceding claims,
**characterized in that**
the multi-axis Hall element (52) is a multi-axis Hall switch (53), wherein the multi-axis Hall switch (53) can be switched to a first switching state when a magnetic field threshold value is exceeded and can be switched to a second switching state when the magnetic field is below the threshold value.

6. Electric motor according to one of the preceding claims,
**characterized in that**
the rotor (40) comprises a plurality of permanent magnets or a plurality of permanently magnetized regions.

7. Electric motor according to claim 6,
**characterized in that**
the multi-axis Hall element (52) for measuring the angle of rotation of the rotor (40) interacts with the permanent magnets or the magnetized regions of the rotor (40), wherein the rotor (40) projects axially out of the stator (14), wherein the multi-axis Hall element (52) is arranged on a projecting portion of the rotor (40).

8. Electric motor according to one of the preceding claims,
**characterized in that**
the multi-axis Hall element (52) is a two-axis Hall element or a three-axis Hall element.

9. Electric motor according to claim 1,
**characterized in that**
both claw pole sheets (28, 30, 32, 34) of a pair of claw pole sheets (24, 26) each comprise eight claws (38) and the rotor (40) is configured as a 16-pole rotor.

## Revendications

1. Moteur électrique pour un dispositif d'un véhicule automobile de réglage ou de transport, comprenant
un stator ( 14 ) ayant un premier bobinage ( 20 ) et un deuxième bobinage ( 22 ), le deuxième bobinage ( 22 ) et le premier bobinage ( 20 ) pouvant être commandés indépendamment l'un de l'autre,
un rotor ( 40 ) qui coopère magnétiquement avec les champs magnétiques produits par une alimentation en courant des bobinages ( 20, 22 ), et
un dispositif de capteur (50 ) pour détecter la position du rotor ( 40 ),
le dispositif de capteur ( 50 ) ayant un élément à effet Hall ( 52 ) à plusieurs axes ayant deux signaux de sortie ( S1, S2 ) , chaque signal de sortie ( S1, S2 ) étant associé respectivement à un axe ( A1, A2 ), de manière à détecter une ligne de champ magnétique orientée dans la direction des axes ( S1, S2 ) et la densité de flux magnétique associée et à modifier la densité de flux magnétique détectée et ainsi les signaux de sortie ( S1, S2 ) en fonction de la position du rotor,
le premier signal de sortie ( S1 ) associé au premier axe ( A1 ) étant déphasé par rapport au deuxième signal de sortie ( S2 ) associé au deuxième axe ( A2 ),
le premier bobinage ( 20 ) pouvant être commandé en utilisant le premier signal de sortie ( S1 ) et le deuxième bobinage ( 22 ) pouvant être commandé en utilisant le deuxième signal de sortie ( S2 ),
**caractérisé en ce que**
le stator ( 14 ) est un stator à pôles à griffes, le stator à pôles à griffes ayant deux éléments de stator à pôles à griffes ( 16, 18 ) , qui sont disposés axialement l'un à côté de l'autre et qui ont respectivement un bobinage ( 20, 22 ) et respectivement une paire de tôles de pôles à griffes ( 24, 26 ) , et un premier élément de stator à pôles à griffes ( 16, 18) étant disposé tourné électriquement de 90° par rapport à un deuxième élément de stator à pôles à griffes ( 16, 18 ) autour d'un axe axial du stator ( 14 ).

2. Moteur électrique suivant la revendication 1,
**caractérisé en ce que**
les pôles magnétiques associés au premier bobinage ( 20 ) sont disposés tournés par rapport aux pôles magnétiques associés au deuxième bobinage ( 22 ), le déphasage entre les deux signaux de sortie ( S1, S2 ) de l'élément à effet Hall ( 52 ) à plusieurs axes étant identique à la rotation électrique entre les deux pôles magnétiques associés aux deux bobinages ( 20, 22 ).

3. Moteur électrique suivant la revendication 2,
**caractérisé en ce que**
les pôles magnétiques associés au premier bobinage ( 20 ) sont disposés tournés électriquement de 90° par rapport aux pôles magnétiques associés au deuxième bobinage ( 22 ).

4. Moteur électrique suivant la revendication 2 ou 3,
**caractérisé en ce que**
les pôles magnétiques associés au premier bobinage ( 20 ) sont disposés tournés mécaniquement d'un angle = 90°/nombre de paires de pôles par rapport aux pôles magnétiques associés au deuxième bobinage ( 22 ).

5. Moteur électrique suivant l'une des revendications précédentes,
**caractérisé en ce que**
l'élément à effet Hall à plusieurs axes ( 52 ) est un interrupteur à effet Hall ( 53 ) à plusieurs axes, l'interrupteur à effet Hall ( 53 ) à plusieurs axes pouvant être commuté dans un premier état de commutation en cas de dépassement d'une valeur de seuil de champ magnétique et pouvant être commuté dans un deuxième état de commutation en dessous de la valeur de seuil de champ magnétique.

6. Moteur électrique suivant l'une des revendications précédentes,
**caractérisé en ce que**
le rotor ( 40 ) a plusieurs aimants permanents ou plusieurs zones magnétisées en permanence.

7. Moteur électrique suivant la revendication 6,
**caractérisé en ce que**
l'élément à effet Hall à plusieurs axes ( 52 ) coopère avec les aimants permanents ou les zones magnétisées du rotor ( 40 ) pour détecter l'angle de rotation du rotor ( 40 ), le rotor ( 40 ) faisant saillie axialement du stator ( 14 ), l'élément à effet Hall à plusieurs axes ( 52 ) étant disposé sur une partie en saillie du rotor (40).

8. Moteur électrique suivant l'une des revendications précédentes,
**caractérisé en ce que**
l'élément à effet Hall à plusieurs axes ( 52 ) est un élément à effet Hall à deux axes ou un élément à effet Hall à trois axes.

9. Moteur électrique suivant la revendication 1,
**caractérisé en ce que**
les deux tôles de pôles à griffes ( 28, 30, 32, 34 ) d'une paire de tôles de pôles à griffes ( 24, 26 ) ont respectivement huit griffes ( 38 ) et le rotor ( 40 ) est à 16 pôles.
